# EUROPEAN PATENT APPLICATION

(11) **EP 3 860 243 A1**
(43) Date of publication of application: **04.08.2021**
(21) Application number: 18934665.3
(22) Date of filing: 27.09.2018
(51) Int. Cl.: H04W 68/00, H04W 16/28, H04W 52/02, H04W 72/04

(54) **USER TERMINAL AND WIRELESS COMMUNICATION METHOD**

(71) Applicant: NTT DoCoMo, Inc., Tokyo 100-6150 (JP)
(72) Inventor: TAKEDA, Daiki, Tokyo 100-6150 (JP); TAKEDA, Kazuaki, Tokyo 100-6150 (JP)
(74) Representative: Hoffmann Eitle
(86) International application number: PCT/JP2018/036133
(87) International publication number: WO 2020/065888

(57) **Abstract**

A user terminal includes a reception section that receives a wake-up signal and a control section that controls, when detecting a wake-up signal associated with an identifier of a first downlink synchronization signal among identifiers associated respectively with a plurality of different downlink synchronization signals, reception of a control signal associated with the wake-up signal in the first downlink synchronization signal, in which a configuration related to the wake-up signal is different depending on a multiplexing scheme of the wake-up signal and the control signal.

## Description

### Technical Field

The present disclosure relates to a user terminal and a radio communication method.

### Background Art

Long Term Evolution (LTE) has been specified for achieving a higher data rate, lower latency, and the like in a Universal Mobile Telecommunications System (UMTS) network. Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio Access Technology (New-RAT), and New Radio (NR).

In Release 15 (Rel. 15), a wake-up signal (WUS) is introduced (for example, see NPL 1).

### Citation List

### Non-Patent Literature

NPL 1
3GPP TS 36.304, "User Equipment (UE) procedures in idle mode (Release 15)", June 2018

### Summary of Invention

### Technical Problem

However, there is room for consideration in the design of the WUS in a radio communication system supporting a multi-beam.

An object of the present disclosure is to make it possible to configure a suitable WUS in the radio communication system supporting the multi-beam.

### Solution to Problem

A user terminal according to one aspect of the present disclosure includes: a reception section that receives a wake-up signal; and a control section that controls, when detecting a wake-up signal associated with an identifier of a first downlink synchronization signal among identifiers respectively associated with a plurality of different downlink synchronization signals, reception of a control signal associated with the wake-up signal in the first downlink synchronization signal, in which a configuration related to the wake-up signal is different depending on a multiplexing scheme of the wake-up signal and the control signal.

A radio communication method according to one aspect of the present disclosure includes: receiving a wake-up signal; and when a wake-up signal associated with an identifier of a first downlink synchronization signal among identifiers respectively associated with a plurality of different downlink synchronization signals is detected, controlling reception of a control signal associated with the wake-up signal in the first downlink synchronization signal, in which a configuration related to the wake-up signal is different depending on a multiplexing scheme of the wake-up signal and the control signal.

### Advantageous Effects of Invention

According to one aspect of the present disclosure, it is possible to configure a suitable WUS in a radio communication system supporting a multi-beam.

### Brief Description of Drawings

FIG. 1 illustrates a first example of a WUS in Rel. 15;
FIG. 2 illustrates a second example of the WUS in Rel. 15;
FIG. 3 is a block diagram illustrating an exemplary configuration of a radio base station according to an embodiment;
FIG. 4 is a block diagram illustrating an exemplary configuration of a user terminal according to the embodiment;
FIG. 5 illustrates an example of multi-beam operation by the radio base station according to the embodiment;
FIG. 6 illustrates an example in which a WUS is disposed before the time of transmission timing of a PO (Paging Occasion) of each beam;
FIG. 7 illustrates an example in which a WUS common to a plurality of beams is disposed;
FIG. 8 illustrates an example of a TDM (Time Division Multiplexing) based multiplexing scheme;
FIG. 9 illustrates an example of a FDM (Frequency Division Multiplexing) based multiplexing scheme;
FIG. 10 illustrates a first example of arrangement of WUSs in TDM base;
FIG. 11 illustrates a second example of arrangement of WUSs in TDM base;
FIG. 12 illustrates a third example of arrangement of WUSs in TDM base;
FIG. 13 illustrates an example of arrangement of WUSs in FDM base; and
FIG. 14 illustrates an exemplary hardware configuration of the radio base station and the user terminal according to the embodiment.

### Description of Embodiments

Hereinafter, an embodiment of the present disclosure will be described with reference to the accompanying drawings.

### (Embodiment)

### <Outline of WUS>

The present embodiment relates to a wake-up signal (hereinafter sometimes referred to as "WUS") which is one method for reducing power consumption of a user terminal (hereinafter sometimes referred to as "UE (User Equipment)). At the beginning, the outline of WUS will be described.

In the formulation of 5G standardization specification, the WUS is introduced in Release 15 (Rel. 15) in order to reduce the power consumption of UEs for IoT. Note that UEs for IoT may be called UEs for NB-IoT (Narrowband IoT) or eMTC (enhanced Machine Type Communication). UEs in the present disclosure are not limited to UEs for IoT and may be UEs for NR

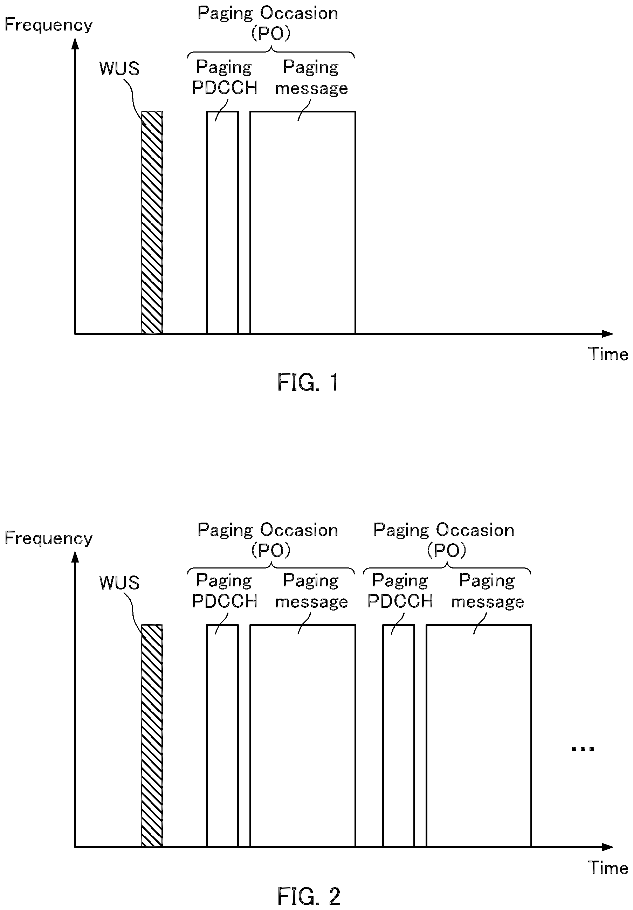

FIG. 1 illustrates a first example of the WUS in Rel. 15. FIG. 2 illustrates a second example of the WUS in Rel. 15.

In FIGS. 1 and 2, a horizontal axis shows time and a vertical axis shows frequency. As illustrated in FIGS. 1 and 2, the WUS may be disposed before transmission timing of a paging PDCCH (Paging Physical Downlink Control Channel) and a paging message. The paging PDCCH and paging message may be referred to as a paging signal or paging occasion. Hereinafter, the paging occasion is sometimes referred to as "PO."

FIG. 1 illustrates an example of the case where a PO without repetition is configured and there is one PO. FIG. 2 illustrates an example of the case where a PO with repetition is configured and the PO is repeated.

The sizes of the WUS, paging PDCCH, and paging message in the time direction and/or frequency direction illustrated in FIGS. 1 and 2 are one example, and the present disclosure is not limited to those. Also, the sizes of the WUS, paging PDCCH, and paging message in the time direction and/or frequency direction in the accompanying drawings shown later are one example, and the present disclosure is not limited to those.

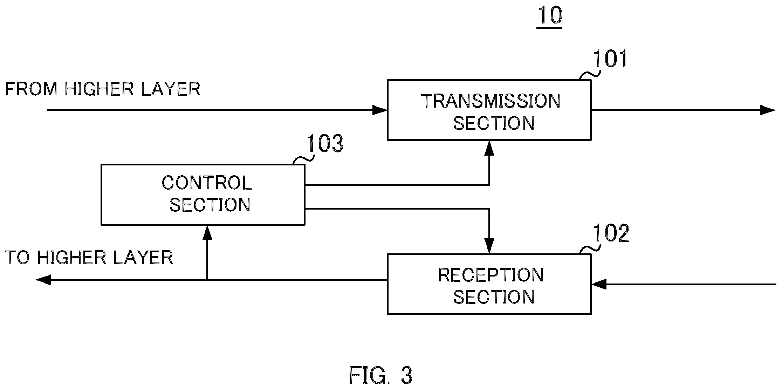

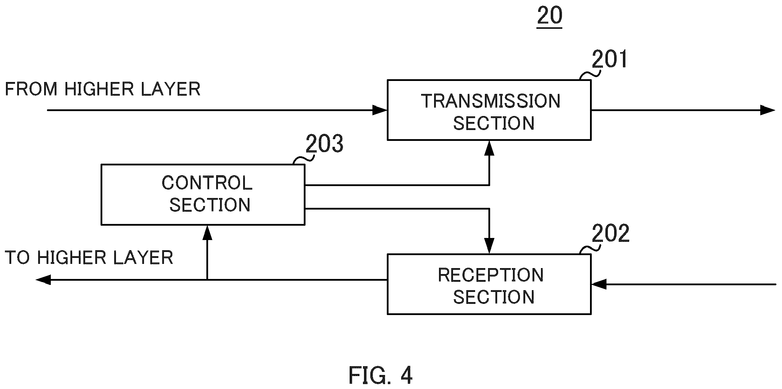

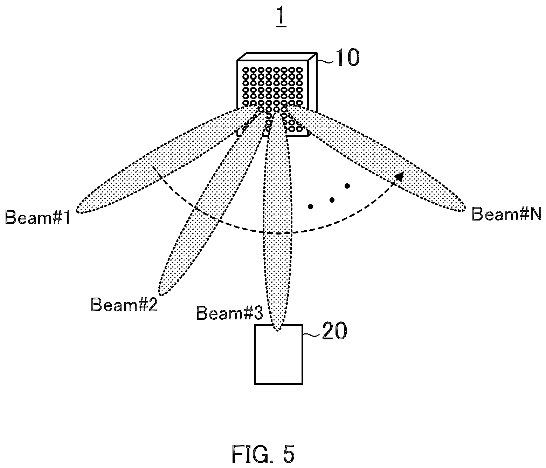

When radio base station 10 (see FIGS. 3 and 5) instructs wake-up to user terminal 20 (see FIGS. 4 and 5) in an idle mode, radio base station 10 may transmit a signal of WUS shown in FIGS. 1 and 2 to user terminal 20, and then transmit a signal of PO. User terminal 20 in the idle mode may shift from the idle mode to a connected mode on the basis of WUS detection processing and PO monitoring processing in response to a WUS detection result.

The idle mode indicates a mode in which user terminal 20 can intermittently receive a signal (downlink signal) from radio base station 10. The connected mode indicates a mode in which user terminal 20 can receive a downlink signal from radio base station 10 and transmit a signal (uplink signal) to radio base station 10.

The expressions "idle mode" and "connected mode" are an example and the present disclosure is not limited to those. In addition, the expressions "WUS," "PO," and "wake-up" are also one example, and the present disclosure is not limited to those.

Upon detecting a WUS, user terminal 20 performs monitoring processing on a PO associated with the user terminal. When a WUS is not detected, user terminal 20 does not need to perform monitoring processing on the PO. The PO monitoring processing may include paging PDCCH detection processing and paging message reception processing based on a paging PDCCH detection result. User terminal 20 may shift from the idle mode to the connected mode by performing monitoring processing on the PO.

Next, a radio communication system according to the present embodiment will be described.

The radio communication system according to the embodiment includes radio base station 10 (also referred to as eNB (eNode B) or gNB (gNode B)) illustrated in FIG. 3 and user terminal 20 (also referred to as UE) illustrated in FIG. 4. User terminal 20 makes radio connection (radio access) to radio base station 10. Configurations of radio base station 10 and user terminal 20 described below are one example. Thus, radio base station 10 and user terminal 20 may have functions not shown. Function classification and/or names of functional sections are not limited as long as functions execute the operation according to the embodiment.

### <Radio Base Station>

FIG. 3 is a block diagram illustrating an exemplary configuration of radio base station 10 according to the embodiment. Radio base station 10 includes transmission section 101, reception section 102, and control section 103.

Transmission section 101 generates various signals of a physical layer from signals of a higher layer and transmits the generated signals (downlink signal) to user terminal 20. For example, transmission section 101 transmits the downlink signal under control of control section 103. The downlink signal may include a WUS, a signal mapped to the paging PDCCH, and a paging message.

Reception section 102 receives a signal (uplink signal) from user terminal 20 and obtains a signal of the higher layer from the received uplink signal of the physical layer.

Control section 103 controls transmission processing of transmission section 101 and reception processing of reception section 102. For example, control section 103 controls transmission processing of the WUS, signal on the paging PDCCH, and paging message in transmission section 101. Also, control section 103 controls transmission of a plurality of beams. That is, control section 103 performs multi-beam operation.

### <User Terminal>

FIG. 4 is a block diagram illustrating an exemplary configuration of user terminal 20 according to the embodiment. User terminal 20 includes transmission section 201, reception section 202, and control section 203.

Transmission section 201 generates various signals of the physical layer from signals of the higher layer and transmits the generated uplink signal to radio base station 10.

Reception section 202 receives a downlink signal from radio base station 10 and obtains a signal of the higher layer from the received downlink signal of the physical layer. For example, reception section 202 receives the downlink signal under control of control section 203.

Control section 203 controls transmission processing of transmission section 201 and reception processing of reception section 202. For example, control section 203 performs detection processing on a WUS and controls monitoring processing on a PO in reception section 202 on the basis of a WUS detection processing result. In addition, based on a PO monitoring processing result, control section 203 switches a transmission/reception state of user terminal 20 from the idle mode to the connected mode.

### <Study>

FIG. 5 illustrates an example of multi-beam operation by radio base station 10. As illustrated in FIG. 5, radio base station 10 can perform sweeping of a plurality of beams #1 to #N. On the other hand, user terminal 20 receives at least one beam of the plurality of beams #1 to #N transmitted from radio base station 10. In order to support the multi-beam operation, a study is made on optimizing arrangement of a multi-WUS (wake-up signal) associated with a multi-beam.

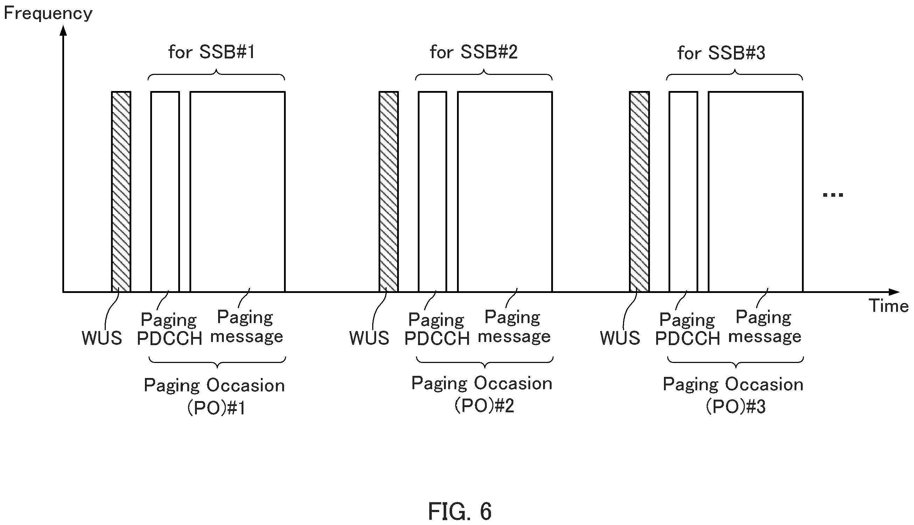

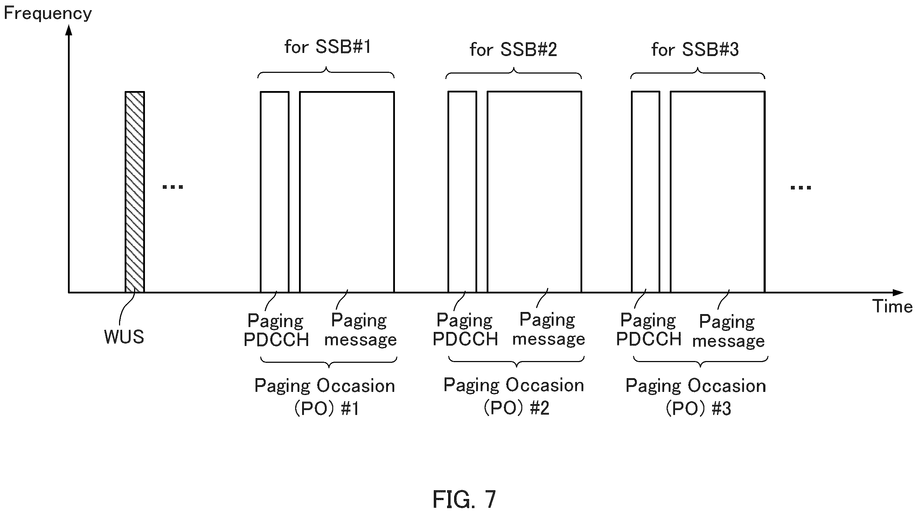

FIG. 6 illustrates an example in which a WUS is disposed before the time of transmission timing of a PO (Paging Occasion) of each beam. In FIG. 6, a horizontal axis shows time and a vertical axis shows frequency. The same applies to FIGS. 7 to 13.

Radio base station 10 may place a WUS before the time of transmission timing of the PO of SSB #1 (corresponding to beam #1) as illustrated in FIG. 6. In this case, upon detecting a WUS, user terminal 20 performs monitoring processing on PO #1 of SSB #1 disposed after the time of transmission timing of the WUS. The SSB is an abbreviation of Synchronization Signal Block. Note that radio base station 10 and user terminal 20 may also perform similar processing on SSBs #2, #3, and the like. Note that, in the embodiment, although the PO of each beam is identified using an SSB index (identification number), the identification method is one example, and it may be identified using other methods such as an identification number individually allocated to a beam.

FIG. 7 illustrates an example in which a WUS common to a plurality of beams is disposed. Radio base station 10 may place a WUS common to a plurality of SSBs #1 to #N before transmission timing of POs #1 to #N of SSBs #1 to #N (corresponding to beams #1 to #N, respectively) as illustrated in FIG. 7. In this case, upon detecting the common WUS, user terminal 20 performs monitoring processing on POs #1 to #N of SSBs #1 to #N disposed after the time of transmission timing of the common WUS.

As a multiplexing scheme of WUS and PO, for example, two types of a TDM based multiplexing scheme and an FDM based multiplexing scheme can be considered.

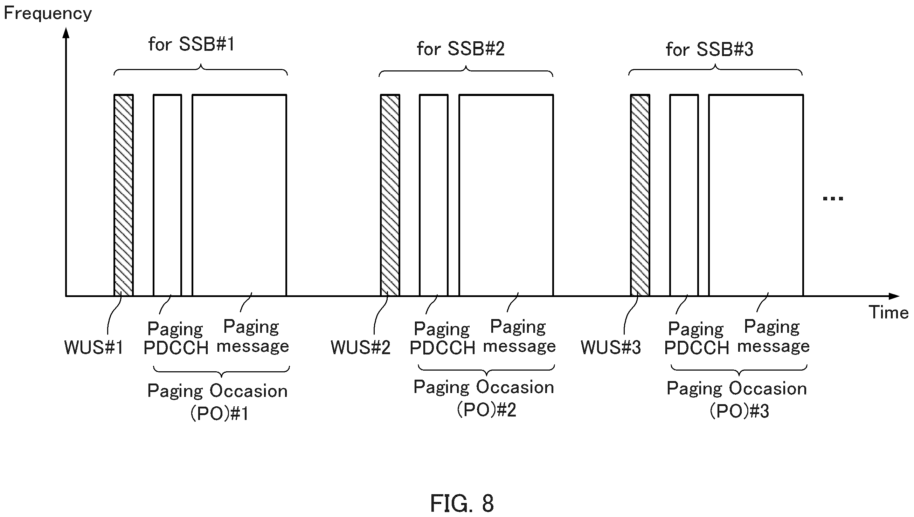

FIG. 8 illustrates an example of the TDM based multiplexing scheme. In the TDM based case, radio base station 10 may place WUS #1 corresponding to PO #1 of beam #1 before the time of transmission timing of PO #1 of SSB #1 as illustrated in FIG. 8. Radio base station 10 may similarly place WUSs #2, #3, and the like for other SSBs #2, #3, and the like.

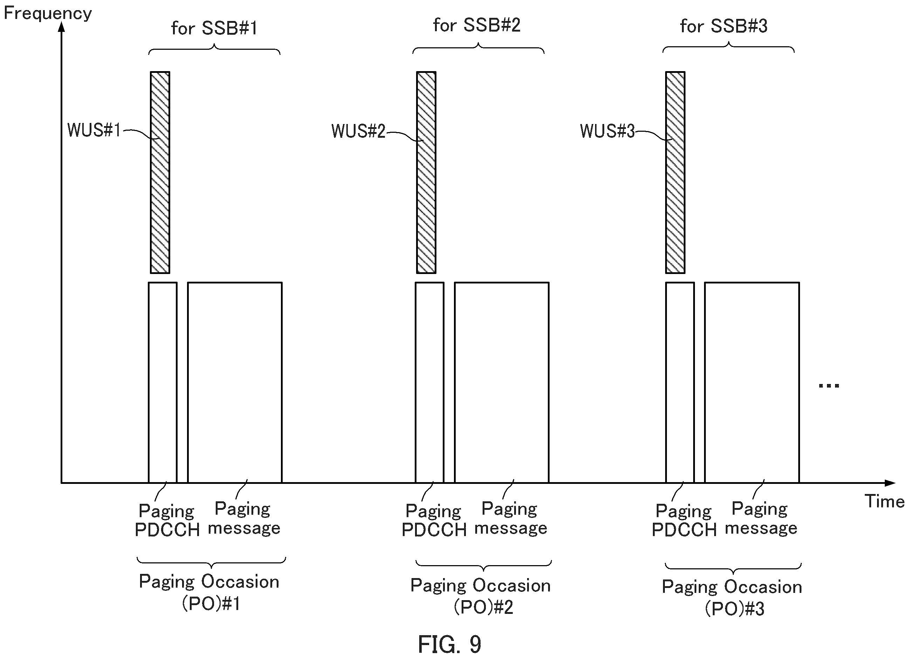

FIG. 9 illustrates an example of the FDM based multiplexing scheme. In the FDM based case, radio base station 10 may place WUS #1 in a frequency band different from the frequency band of PO #1 during the transmission period of PO #1 of SSB #1 as illustrated in FIG. 9. Radio base station 10 may similarly place WUSs #2, #3, and the like for other SSBs #2, #3, and the like.

### <Proposal>

When a multiplexing scheme can take a plurality of types as described above, it can be considered that an optimal configuration of WUS is different depending on the multiplexing scheme. Accordingly, the configuration of WUS may be different depending on a multiplexing scheme between WUS and PO (or frequency band).

For example, the relationship between a multiplexing scheme and a WUS configuration may be defined in specification according to the frequency band (or frequency range).

For example, depending on the multiplexing scheme, the following parameters may be different. That is, depending on the multiplexing scheme, a parameter indicating whether or not a WUS sequence is based on an SSB index may be different. Alternatively, depending on the multiplexing scheme, a parameter indicating whether or not a time offset or frequency offset between WUS and PO is configured by a higher layer may be different. Specific examples will be described below in the cases where the multiplexing scheme is TDM based and it is FDM based.

### <TDM Base>

If the multiplexing scheme is TDM based, the time offset between WUS and PO may be configurable differently for each SSB index. The time offset may be configured by higher layer signaling. Alternatively, the time offset may be implicitly indicated by a WUS sequence. Note that the WUS sequence is preferably based on an SSB index distinguishable from an SSB index of a PO actually transmitted. The time offset may be expressed by the number of symbols between WUS and PO. The time offset does not necessarily need to be different for each SSB index and some of time offsets may be the same. Next, specific examples of TDM base will be described.

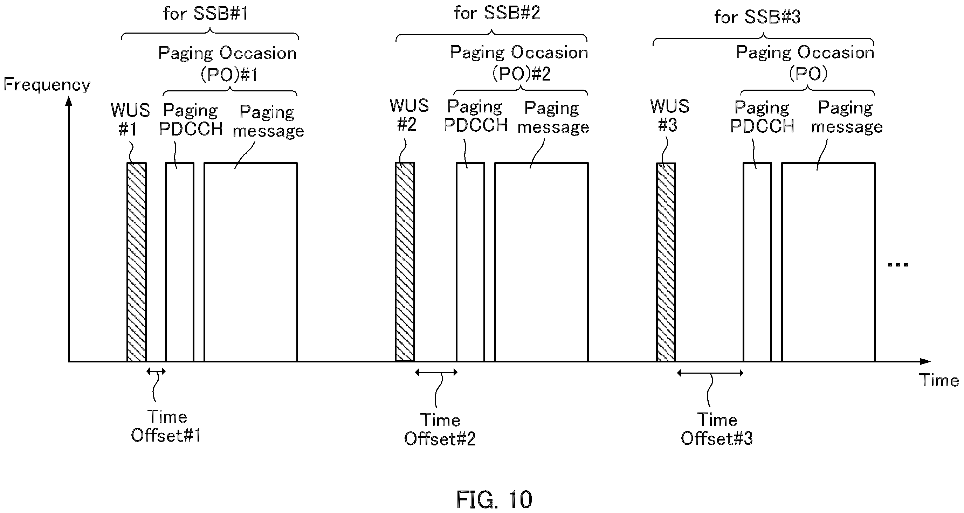

FIG. 10 illustrates a first example of arrangement of WLlSs in TDM base.

Radio base station 10 may place WUS #1 corresponding to PO #1 before the time of transmission timing of PO #1 of SSB #1 as illustrated in FIG. 10. Radio base station 10 may similarly place WUSs #2, #3, and the like for other SSBs #2, #3, and the like. For example, time offset #1 between WUS #1 and PO #1 may be different from time offset #2 between WUS #2 and PO #2. That is, the time offset may be different for each SSB index corresponding to a beam.

For example, radio base station 10 may configure time offset #1 to user terminal 20 by higher layer signaling. In this case, upon detecting WUS #1, user terminal 20 may perform monitoring processing (such as receiving and/or decoding) on PO #1 disposed after by time offset #1 configured by the higher layer signaling. In addition, radio base station 10 and user terminal 20 may also perform similar processing for time offsets #2, #3, and the like.

Alternatively, radio base station 10 may implicitly indicate time offset #1 to user terminal 20 by the sequence of WUS #1. In this case, upon detecting WUS #1, user terminal 20 may perform monitoring processing on PO #1 disposed after by time offset #1 indicated by the sequence of WUS #1. In addition, radio base station 10 and user terminal 20 may also perform similar processing for time offsets #2, #3, and the like.

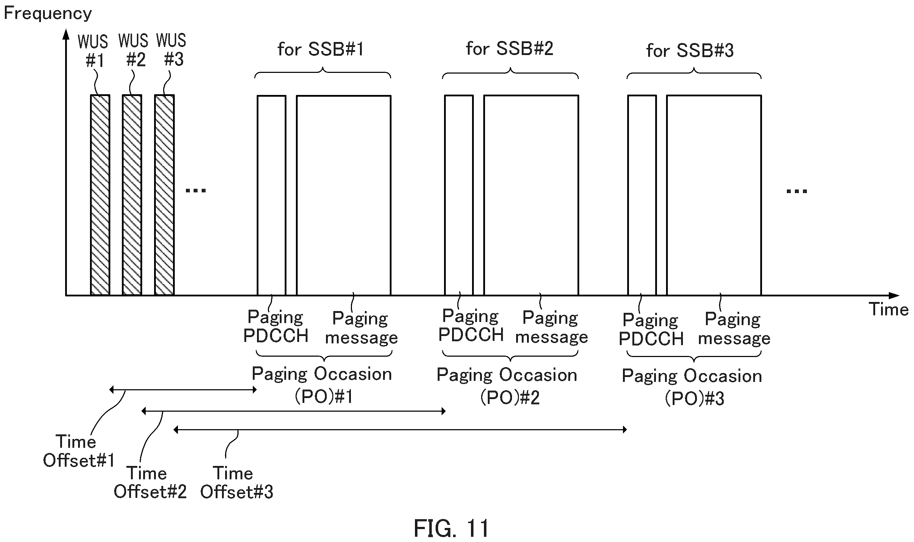

FIG. 11 illustrates a second example of arrangement of WUSs in TDM base
Radio base station 10 may place a WUS corresponding to a PO of each beam before the times of transmission timing of POs of a plurality of beams (SSBs) as illustrated in FIG. 11. Time offset #1 between WUS #1 and PO #1 may be different from time offset #2 between WUS #2 and PO #2. That is, the time offset may be different for each SSB index.

A method by which radio base station 10 configures or indicates the time offset to user terminal 20 and a method for user terminal 20 to detect a WUS and perform monitoring processing (such as receiving and/or decoding) on a PO may be the same as the above case of FIG. 10.

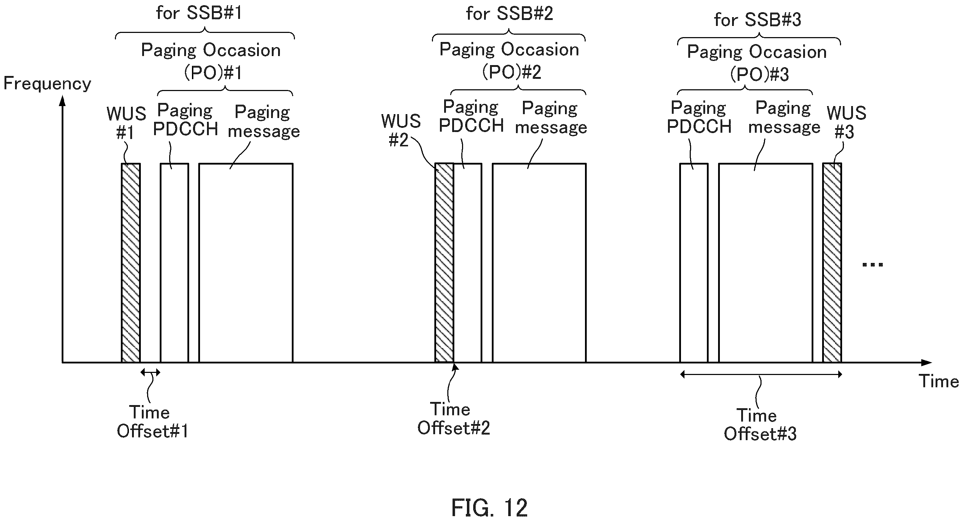

FIG. 12 illustrates a third example of arrangement of WUSs in TDM base.

WUS is not limited to being placed before the time of transmission timing of PO. For example, as illustrated in SSB #2 in FIG. 12, radio base station 10 may place WUS #2 immediately before the transmission timing of PO #2 of SSB #2. In this case, upon detecting WUS #2, user terminal 20 may perform monitoring processing on PO #2 disposed after by time offset #2 from WUS #2 (that is, immediately after).

In addition, as shown for SSB #3 in FIG. 12, radio base station 10 may place WUS #3 after the transmission timing of PO #3 of SSB #3. In this case, upon detecting WUS #3, user terminal 20 may perform decoding processing or the like on PO #3 disposed before by time offset #3 from WUS #3 regarding a signal received and stored in a memory.

The cases like SSBs #2 and #3 also fall into a case where time offset is different for each SSB index.

A method by which radio base station 10 configures or notifies the time offset to user terminal 20 and a method for user terminal 20 to detect a WUS and perform monitoring processing (such as receiving and/or decoding) on a PO may be the same as the above case of FIG. 10.

The time offset between WUS and PO illustrated in FIGS. 10 to 12 is an example. For example, the time offset may be between start timing of WUS and start timing of PO.

As described above, in the TDM based case, the time offset between WUS and PO is configurable for each SSB index of PO. This configuration enables more flexible scheduling. For example, even if there are large constraints on a position where an SSB and a PO associated with it can be placed, as in NR, the configuration makes it possible to flexibly place WUS and PO in an arbitrary space.

### <FDM Base>

When the multiplexing scheme is FDM based, the time offset between WUS and PO may be defined by specification or may be configured semi-statically. In the FDM based case, the WUS sequence does not necessarily need to be based on an SSB index. The frequency offset between WUS and PO may be configured by the higher layer signaling. Alternatively, the frequency offset may be implicitly indicated by the WUS sequence. Next, a specific example of FDM base will be described.

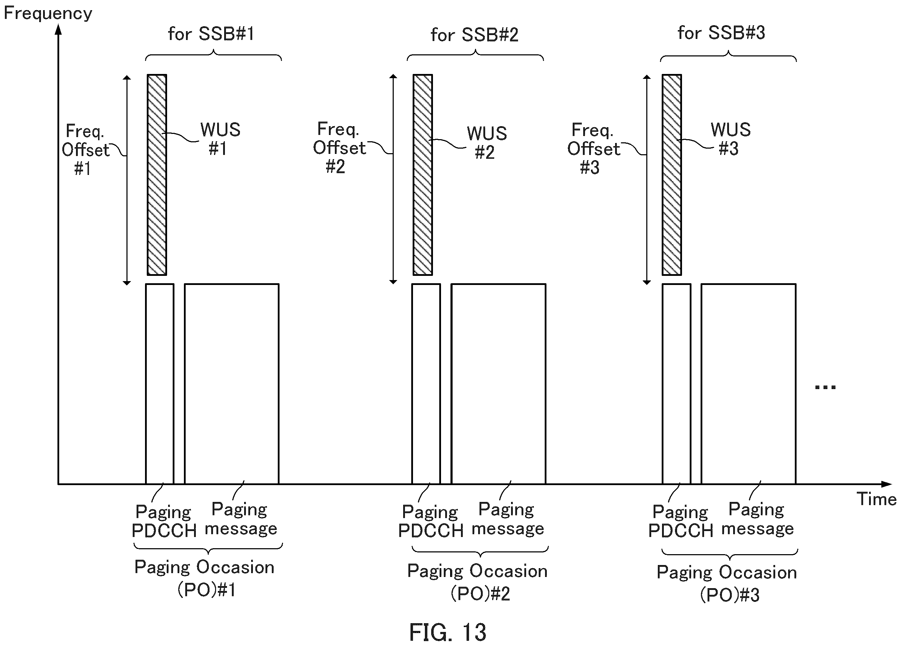

FIG. 13 illustrates an example of arrangement of WUSs in FDM base.

Radio base station 10 may place WUS #1 corresponding to PO #1 of beam #1 at a position (frequency band) shifted by frequency offset #1 from PO #1 during the transmission period of PO #1 of beam #1 as illustrated in FIG. 13. The same applies to other beams. Note that the time offset between WUS and PO may be defined by specification in advance or may be configured semi-statically.

For example, radio base station 10 may configure frequency offset #1 to user terminal 20 by the higher layer signaling. In this case, upon detecting WUS #1, user terminal 20 may perform monitoring processing (such as receiving and/or decoding) on PO #1 disposed by shifting by frequency offset #1 configured by the higher layer signaling. In addition, radio base station 10 and user terminal 20 may also perform similar processing for frequency offset #2, #3.

Alternatively, radio base station 10 may implicitly indicate frequency offset #1 to user terminal 20 by the sequence of WUS #1. In this case, upon detecting WUS #1, user terminal 20 may perform monitoring processing (such as receiving and/or decoding) on PO #1 disposed by shifting by frequency offset #1 indicated by the sequence of WUS #1. In addition, radio base station 10 and user terminal 20 may also perform similar processing for frequency offsets #2, #3.

In the FDM based case, as described above, the WUS sequence does not necessarily need to be based on the SSB index. It is not assumed that a WUS which is assumed to be placed semi-statically is placed at a frequency position different for each SSB index, because the complexity of the detection processing in user terminal 20 unnecessarily increases if the WUS sequence is based on the SSB index. Therefore, it is not necessary to individually notify the frequency position of WUS for each SSB index and it is not necessary to associate the WUS with the SSB index.

The frequency offset between WUS and PO as illustrated in FIG. 13 is an example. For example, the frequency offset may be between a center frequency of WUS and a center frequency of PO.

As described above, regarding a multi-WUS associated with a multi-beam, different configurations are made possible depending on multiplexing schemes (TDM based and FDM based), which allows for optimal design corresponding to the multiplexing schemes.

### <Modified Example>

The arrangement of WUS may be a combination of at least two of the arrangements exemplified in FIGS. 10 to 13. For example, in the arrangement of WUS in TDM base, at least two of the arrangements exemplified in FIGS. 10 to 12 may be combined. Alternatively, at least one of the arrangements of WUS in TDM base exemplified in FIGS. 10 to 12 may be combined with the arrangement of WUS in FDM base exemplified in FIG. 13.

Although the above description explains the example in which user terminal 20 that has received a WUS performs monitoring processing on the paging PDCCH, which is an example of a paging signal, objects of WUS are not limited to the paging PDCCH. For example, user terminal 20 that has received a WUS may perform monitoring processing on a control signal on a PDCCH for data or the like.

### <Summary of Present Disclosure>

Radio base station 10 according to one embodiment includes transmission section 101 configured to transmit an SSB and control section 103 configured to place (map) a WUS associated with an SSB index and place a PO (control signal) in an SSB of the SSB index associated with the WUS, in which a configuration related to the WUS is different depending on a multiplexing scheme of the WUS and the PO (for example, TDM based and FDM based).

User terminal 20 according to one embodiment includes a reception section configured to receive a WUS transmitted from radio base station 10 and a control section configured to control, upon detecting a WUS associated with an SSB index, monitoring processing (such as receiving) on a PO (control signal) of an SSB of the SSB index associated with the WUS, in which a configuration related to the WUS is different depending on a multiplexing scheme of the WUS and the PO (for example, TDM based and FDM based).

According to the configurations, in a radio communication system supporting a multi-beam, it is possible to design a suitable WUS depending on the multiplexing scheme of the WUS and the PO. In addition, the WUS can be placed more flexibly.

The embodiment of the present disclosure has been described above.

### (Hardware Configuration and the like)

Note that the block diagrams used in the description of the above embodiment illustrate blocks of functional units. These functional blocks (constituent sections) are implemented by any combination of at least one of hardware and software. Methods for implementing the functional blocks are not particularly limited. That is, the functional blocks may be implemented by using one apparatus physically or logically coupled. Two or more apparatuses physically or logically separated may be directly or indirectly (for example, using wires or radio) connected, and the plurality of apparatuses may implement the functional blocks. The functional blocks may be implemented by combining software with the above-described one apparatus or the above-described plurality of apparatuses.

Functions include, but not limited to, judging, deciding, determining, computing, calculating, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating or mapping, and assigning. For example, a functional block (constituent section) that makes transmission function is called a transmitting section or a transmitter. In any case, as described above, implementation methods are not particularly limited.

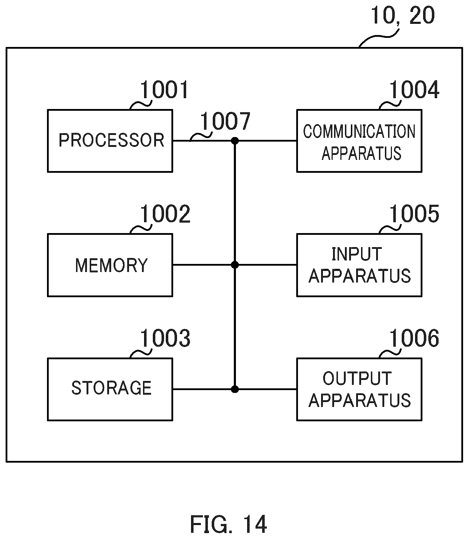

For example, radio base station 10, user terminal 20, and the like in the embodiment of the present disclosure may function as a computer that executes processing of the radio communication methods of the disclosure. FIG. 14 illustrates an exemplary hardware configuration of radio base station 10 and user terminal 20 according to the embodiment of the present disclosure. Radio base station 10 and user terminal 20 described above may be physically configured as a computer apparatus including processor 1001, memory 1002, storage 1003, communication apparatus 1004, input apparatus 1005, output apparatus 1006, bus 1007, and the like.

Note that the term "apparatus" in the following description can be read as a circuit, a device, a unit, or the like. The hardware configurations of base station 10 and user terminal 20 may include one or more apparatuses for each of the apparatuses illustrated in the figure or may not include some of the apparatuses.

The functions in radio base station 10 and user terminal 20 are implemented by loading predetermined software (program) into hardware, such as processor 1001 and memory 1002, thereby causing processor 1001 to perform arithmetic and control communication performed by communication apparatus 1004 and at least one of reading and writing data from or into memory 1002 and storage 1003.

Processor 1001 operates an operating system to entirely control the computer, for example. Processor 1001 may be composed of a central processing unit (CPU) including an interface with peripheral apparatuses, a control apparatus, an arithmetic apparatus, a register, and the like. For example, control sections 103 and 203 and the like described above may be implemented by processor 1001.

Processor 1001 reads out a program (program code), a software module, or data from at least one of storage 1003 and communication apparatus 1004 to memory 1002 and executes various types of processing according to the read-out program or the like. The program used is a program for causing the computer to execute at least part of the operations described in the embodiment. For example, control section 203 of user terminal 20 may be implemented by a control program stored in memory 1002 and executed by processor 1001, and the other functional blocks may also be implemented in the same way. While it has been explained that the various types of processing described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of at least one of, for example, a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication methods according to the embodiment of the present disclosure.

Storage 1003 is a computer-readable recording medium and may be composed of at least one of, for example, an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium described above may be, for example, a database, a server, or another appropriate medium including at least one of memory 1002 and storage 1003.

Communication apparatus 1004 is hardware (transmission/reception device) for communication between computers through at least one of a wired network and a radio network and is also called, for example, a network device, a network controller, a network card, or a communication module. Communication apparatus 1004 may be composed of a high-frequency switch, a duplexer, a filter, a frequency synthesizer, and the like in order to implement at least one of, for example, frequency division duplex (FDD) and time division duplex (TDD). For example, transmission sections 101 and 201, reception sections 102 and 202, and the like described above may be implemented by communication apparatus 1004. A transmission/reception section may be implemented in such a way that a transmission section and a reception section are physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or buses different among the apparatuses.

Furthermore, radio base station 10 and user terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented by using at least one of these pieces of hardware.

### <Notification and Signaling of Information>

The notification of information is not limited to the aspects/embodiment described in the present disclosure, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block) and SIB (System Information Block))), and other signals. The RRC signaling may be called an RRC message and may be, for example, an RRC connection setup message or an RRC connection reconfiguration message.

### <Applicable System>

The aspects/embodiment described in the present disclosure may be applied to at least one of systems using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and next-generation systems extended based on those systems. In addition, they may be applied to combinations of a plurality of systems (for example, a combination of 5G and at least one of LTE and LTE-A).

### <Processing Procedure and the like>

The orders of the processing procedures, the sequences, the flow charts, and the like of the aspects/embodiment described in the present disclosure may be changed as long as there is no contradiction. For example, elements of various steps are presented in exemplary orders in the methods described in the present disclosure, and the methods are not limited to the presented specific orders.

### <Operations of Base Station>

The specific operations which are described in the disclosure as being performed by the base station may be performed by an upper node depending on the situation. Various operations performed for communication with a terminal in a network including one or more network nodes including a base station can be obviously performed by the base station and/or a network node other than the base station (examples include, but not limited to, MME or S-GW). Although the case where there is one network node other than the base station is illustrated in the above, a plurality of other network nodes may be combined (for example, MME and S-GW).

### <Directions of Input and Output>

The information and the like (see paragraph "Information and Signals") can be output from a higher layer (or a lower layer) to a lower layer (or a higher layer). The information and the like may be input and output through a plurality of network nodes.

### <Handling of Input and Output Information and the like>

The input and output information and the like may be saved in a specific place (for example, a memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variation or the like of Aspects>

The aspects/embodiment described in the disclosure may be used singly, may be used in combination, or may be used by switching them according to execution. Notification of predetermined information (for example, notification of "being X") is not limited to being performed explicitly, and may be performed implicitly (for example, by not notifying the predetermined information).

While the present disclosure has been described in detail, it is obvious to those skilled in the art that the present disclosure is not limited to the embodiment described in the present disclosure. The present disclosure can be implemented as modifications and variations of the aspects without departing from the spirit and the scope of the present disclosure defined by the description of the appended claims. Therefore, the description of the present disclosure is intended for exemplary description and does not limit the present disclosure in any sense.

### <Software>

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (such as a coaxial cable, an optical fiber cable, a twisted pair, and a digital subscriber line (DSL)) and a radio technique (such as an infrared ray and a microwave), at least one of the wired technique and the radio technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description above may be expressed by voltage, current, electromagnetic waves, magnetic fields or magnetic particles, optical fields or photons, or any combination thereof.

Note that the terms described in the present disclosure and the terms necessary to understand the present disclosure may be replaced with terms with the same or similar meaning. For example, at least one of the channel and the symbol may be signaling. The signaling may be a message. The component carrier (CC) may be called a carrier frequency, a cell, a frequency carrier, or the like.

### <" System" and "Network">

The terms "system" and "network" used in the present disclosure can be interchangeably used.

### <Names of Parameters and Channels>

The information, the parameters, and the like described in the present disclosure may be expressed by absolute values, by values relative to predetermined values, or by other corresponding information. For example, radio resources may be indicated by indices.

The above-described names used for the parameters are not limiting names in any respect. Furthermore, numerical formulas and the like using the parameters may be different from the ones explicitly disclosed in the present disclosure. Various channels (for example, PUCCH and PDCCH) and information elements can be identified by any suitable names, and various names assigned to these various channels and information elements are not limiting names in any respect.

### <Base Station>

Terms "base station (BS)," "radio base station," "fixed station," "Node B," "eNode B (eNB)," "gNode B (gNB)," "access point," "transmission point," "reception point," "transmission/reception point," "cell," "sector," "cell group," "carrier," "component carrier," and the like can be used interchangeably in the disclosure. The base station may also be called by terms such as a macro cell, a small cell, a femtocell, and a picocell.

The base station can accommodate one or more (for example, three) cells. When the base station accommodates a plurality of cells, the entire coverage area of the base station can be divided into a plurality of smaller areas, and in each of the smaller areas, a communication service can be provided by a base station subsystem (for example, a small base station for indoor, remote radio head (RRH)). The term "cell" or "sector" denotes part or all of the coverage area of at least one of the base station and the base station subsystem that provide the communication service in the coverage.

### <Mobile Station>

The terms "mobile station (MS)," "user terminal," "user equipment (UE)," "terminal," and the like can be interchangeably used in the present disclosure.

The mobile station may be sometimes called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, client, or some other appropriate terms.

### <Base Station/Mobile Station>

At least one of the base station and the mobile station may be called a transmission apparatus, a reception apparatus, a communication apparatus, and the like. Note that at least one of the base station and the mobile station may be a device mounted on a movable body, a movable body itself, or the like. The movable body may be a vehicle (for example, a car or an airplane), may be an unmanned movable body (for example, a drone or a self-driving vehicle), or may be a robot (manned or unmanned). Note that at least one of the base station and the mobile station also includes an apparatus that does not necessarily move during communication operation. For example, at least one of the base station and the mobile station may be an IoT (Internet of Things) device such as a sensor.

The base station in the disclosure may be read as a user terminal. For example, the aspects/embodiment of the disclosure may be applied to a configuration in which communication between the base station and the user terminal is replaced with communication between a plurality of user terminals (for example, may be called D2D (Device-to-Device) and V2X (Vehicle-to-Everything)). In this case, user terminal 20 may have the above-described functions of base station 10. In addition, the terms "uplink," "downlink," and the like may be read as a term (for example, "side") corresponding to inter-terminal communication. For example, the uplink channel, the downlink channel, and the like may be read as a side channel.

In the same manner, the user terminal in the disclosure may be read as a base station. In this case, base station 10 may have the above-described functions of user terminal 20.

### <Meaning and Interpretation of Terms>

The term "determining" used in the disclosure may encompass a wide variety of actions. For example, "determining" may include regarding, as "determining," judging, calculating, computing, processing, deriving, investigating, looking up (or searching or inquiring) (e.g., looking up in a table, a database, or another data structure), and ascertaining. Also, "determining" may include regarding, as "determining," receiving (e.g., receiving information), transmitting (e.g., transmitting information), inputting, outputting, and accessing (e.g., accessing data in a memory). Also, "determining" may include regarding, as "determining," resolving, selecting, choosing, establishing, comparing, or the like. That is, "determining" may include regarding some action as "determining." In addition, "determining" may be read as assuming, expecting, considering, or the like.

The terms "connected" and "coupled" as well as any modifications of the terms mean any direct or indirect connection or coupling between two or more elements, and can encompass the presence of one or more intermediate elements between two elements "connected" or "coupled" with each other. The coupling or the connection between elements may be physical or logical or may be a combination thereof. For example, "connection" may be read as "access." When the terms are used in the present disclosure, two elements can be considered to be "connected" or "coupled" with each other by using at least one of one or more electrical wires, cables, and printed electrical connections, or by using electromagnetic energy with a wavelength of a radio frequency domain, a microwave domain, or an optical (both visible and invisible) domain as non-limiting and non-inclusive examples.

### <Reference Signal>

The reference signal can be abbreviated as RS and may be called a pilot depending on an applied standard.

### <Meaning of "Based On">

The description "based on" used in the disclosure does not mean "based only on," unless otherwise specifically stated. In other words, the description "based on" means both of "based only on" and "based at least on."

### <"First" and "Second">

Any reference to elements using designations such as "first" and "second" used in the disclosure does not generally limit amounts or order of the elements. These designations can be used herein as a convenient way to distinguish between two or more elements. Thus, reference to first and second elements does not imply that only two elements may be employed or that the first element must precede the second element in some way.

### <Means>

"Means" in the configuration of each of the above-described apparatuses may be replaced with "section," "circuit," "device," and the like.

### <Open Form>

As long as "include," "including," and modifications thereof are used in the disclosure, the terms are intended to be inclusive just like the term "comprising." Furthermore, the term "or" used in the disclosure is not intended to be an exclusive or.

### <Time Unit of TTI and the like, Frequency Unit of RB and the like, and Radio Frame Configuration>

The radio frame may be constituted by one or more frames in the time domain. Each of the one or more frames may be called a subframe in the time domain.

The subframe may be further constituted by one or more slots in the time domain. The subframe may be a fixed time length (for example, 1 ms) independent of numerology.

The numerology may be a communication parameter applied to a certain signal or at least one of transmission and reception of a channel. The numerology may indicate at least one of, for example, subcarrier spacing (SCS), bandwidth, symbol length, cyclic prefix length, a transmission time interval (TTI), the number of symbols per TTI, a radio frame configuration, specific filtering processing which a transceiver performs in the frequency domain, and specific windowing processing which the transceiver performs in the time domain.

The slot may be composed of one or more symbols (OFDM (Orthogonal Frequency Division Multiplexing) symbols, SC-FDMA (Single Carrier Frequency Division Multiple Access) symbols, or the like) in the time domain. The slot may be a time unit based on numerology.

The slot may include a plurality of minislots. Each minislot may be composed of one or more symbols in the time domain. The minislot may be called a subslot. The minislot may be composed of a fewer number of symbols than the slot. PDSCH (or PUSCH) transmitted in a time unit larger than the minislot may be called a PDSCH (or PUSCH) mapping type A. PDSCH (or PUSCH) transmitted using the minislot may be called a PDSCH (or PUSCH) mapping type B.

All of the radio frame, the subframe, the slot, the minislot, and the symbol represent time units when signals are transmitted. For the radio frame, the subframe, the slot, the minislot, and the symbol, different designations corresponding to each may be used.

For example, one subframe may be called a transmission time interval (TTI), or a plurality of consecutive subframes may be called a TTI, or one slot or one minislot may be called a TTI. That is, at least one of the subframe and the TTI may be the existing subframe (1 ms) in LTE, may be a period shorter than 1 ms (for example, 1-13 symbols), or may be a period longer than 1 ms. Note that the unit representing the TTI may be called a slot, a minislot, or the like rather than the subframe.

Here, the TTI refers to, for example, the minimum time unit of scheduling in radio communication. For example, in the LTE system, the base station performs scheduling of allocating radio resources (frequency bandwidth, transmission power, or the like which each user terminal can use) to each user terminal in TTI units. Note that the definition of the TTI is not limited to this.

The TTI may be a transmission time unit for a channel-coded data packet (transport block), a code block, a code word, or the like, or may be a processing unit for scheduling, link adaptation, or the like. Note that, when a TTI is given, a time interval (for example, the number of symbols) in which a transport block, a code block, a code word, or the like is actually mapped may be shorter than the TTI.

When one slot or one minislot is called a TTI, one or more TTIs (that is, one or more slots or one or more minislots) may be the minimum time unit for scheduling. In addition, the number of slots (number of minislots) constituting the minimum time unit of the scheduling may be controlled.

A TTI having a time length of 1 ms may be called a usual TTI (TTI in LTE Rel. 8-12), a normal TTI, a long TTI, a usual subframe, a normal subframe, a long subframe, a slot, or the like. A TTI shorter than the usual TTI may be called a shortened TTI, a short TTI, a partial or fractional TTI, a shortened subframe, a short subframe, a minislot, a subslot, a slot or the like.

The long TTI (for example, the usual TTI and the subframe) may be read as a TTI having a time length exceeding 1 ms, and the short TTI (for example, the shortened TTI) may be read as a TTI having a TTI length less than the TTI length of the long TTI and equal to or more than 1 ms.

A resource block (RB) is a resource assignment unit in the time domain and the frequency domain, and may include one subcarrier or a plurality of continuous subcarriers in the frequency domain. The number of subcarriers included in the RB may be the same regardless of numerology, and may be, for example, 12. The number of subcarriers included in the RB may be determined based on numerology.

In addition, the RB may include one or more symbols in the time domain, and may have the length of one slot, one minislot, one subframe, or one TTI. One TTI, one subframe, and the like may be constituted by one or more resource blocks.

One or more RBs may be called a physical resource block (PRB: Physical RB), a subcarrier group (SCG), a resource element group (REG), a PRB pair, an RB pair, or the like.

The resource block may be constituted by one or more resource elements (REs). For example, one RE may be a radio resource region of one subcarrier and one symbol.

A bandwidth part (BWP) (may be called partial bandwidth or the like) may represent a subset of consecutive common RBs (common resource blocks) for certain numerology in a certain carrier. Here, the common RBs may be specified by an index of the RB based on a common reference point of the carrier concerned. A PRB may be defined by certain BWP, and numbered in the BWP.

The BWP may include BWP for UL (UL BWP) and BWP for DL (DL BWP). One or more BWPs are set in one carrier for the UE.

At least one of set BWPs may be active, and the UE may not assume that the UE transmits or receives a predetermined signal/channel outside the active BWP. Note that "cell," "carrier," and the like in the disclosure may be read as "BWP."

The above-described structures of the radio frame, the subframe, the slot, the minislot, the symbol, and the like are merely examples. It is possible to variously change the configurations, for example, the number of subframes included in the radio frame, the number of slots per subframe or radio frame, the number of minislots included in the slot, the numbers of symbols and RBs included in the slot or the minislot, the number of subcarriers included in the RB, and the number of symbols in the TTI, symbol length, and cyclic prefix (CP) length.

### <Maximum Transmission Power>

The "maximum transmission power" described in the disclosure may mean the maximum value of transmission power, may mean the nominal UE maximum transmit power, or may mean the rated UE maximum transmit power.

### <Article>

When articles, for example, like "a," "an," and "the" in English, are added by translation in the disclosure, the disclosure may include plural forms of nouns following these articles.

### <"Different">

The clause "A and B are different" in the disclosure may mean "A and B are mutually different." Note that the clause may mean "A and B are each different from C." The terms "leaving," "coupled," and the like may be interpreted in the same manner as "different."

### Industrial Applicability

An aspect of the present disclosure is useful for a radio communication system.

### Reference Signs List

10 Radio Base Station
20 User Terminal
101, 201 Transmission Section
102, 202 Reception Section
103, 203 Control Section

## Claims

1. A user terminal, comprising:
a reception section that receives a wake-up signal; and
a control section that controls, when detecting a wake-up signal associated with an identifier of a first downlink synchronization signal among identifiers respectively associated with a plurality of different downlink synchronization signals, reception of a control signal associated with the wake-up signal in the first downlink synchronization signal, wherein
a configuration related to the wake-up signal is different depending on a multiplexing scheme of the wake-up signal and the control signal.

2. The user terminal according to claim 1, wherein, when the multiplexing scheme is based on TDM (Time Division Multiplexing), a time offset between the wake-up signal and the control signal is configured according to a number of the downlink synchronization signal.

3. The user terminal according to claim 2, wherein the time offset is configured by higher layer signaling or is indicated by a sequence of the wake-up signal.

4. The user terminal according to claim 1, wherein, when the multiplexing scheme is based on FDM (Frequency Division Multiplexing), a configuration of the time offset between the wake-up signal and the control signal is predetermined.

5. The user terminal according to claim 4, wherein a frequency offset between the wake-up signal and the control signal is configured by higher layer signaling or is indicated by a sequence of the wake-up signal.

6. A radio communication method, comprising:
receiving a wake-up signal; and
when a wake-up signal associated with an identifier of a first downlink synchronization signal among identifiers respectively associated with a plurality of different downlink synchronization signals is detected, controlling reception of a control signal associated with the wake-up signal in the first downlink synchronization signal, wherein
a configuration related to the wake-up signal is different depending on a multiplexing scheme of the wake-up signal and the control signal.
